(19) Europäisches Patentamt
European Patent Office
Office européen des brevets

(11) Veröffentlichungsnummer: **0 027 915**
**B1**

(12) # EUROPÄISCHE PATENTSCHRIFT

(45) Veröffentlichungstag der Patentschrift: **18.05.83**

(21) Anmeldenummer: **80105933.8**

(22) Anmeldetag: **01.10.80**

(51) Int. Cl.³: **A 01 N 43/88,** A 01 N 43/90 // (A01N43/88, 39/00),(A01N43/90, 39/00)

(54) **Herbizide Mittel auf der Basis von Diphenyläthern und Benzothiadiazinondioxiden bzw. Pyridinothiadiazinondioxiden und deren Verwendung.**

(30) Priorität: **08.10.79 DE 2940698**

(43) Veröffentlichungstag der Anmeldung: **06.05.81 Patentblatt 81/18**

(45) Bekanntmachung des Hinweises auf die Patenterteilung: **18.05.83 Patentblatt 83/20**

(84) Benannte Vertragsstaaten: **AT BE CH DE FR GB IT LI NL SE**

(56) Entgegenhaltungen:

**CHEMICAL ABSTRACTS, Band 83, Nr. 15, 13. Oktober 1975, Seite 160, Zusammenfassung Nr. 127493g, Columbus, Ohio, US**
**CHEMICAL ABSTRACTS, Band 84, Nr. 9, 1. März 1976, Seite 173, Zusammenfassung Nr. 55318z, Columbus, Ohio, US**

(73) Patentinhaber: **BASF Aktiengesellschaft, Carl-Bosch-Strasse 38, D-6700 Ludwigshafen (DE)**

(72) Erfinder: **Wuerzer, Bruno, Dr., Ruedigerstrasse 13, D-6701 Otterstadt (DE)**

**EP 0 027 915 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

# Herbizide Mittel auf der Basis von Diphenyläthern und Benzothiadiazinondioxiden bzw. Pyridinothiadiazinondioxiden und deren Verwendung

Die vorliegende Erfindung betrifft herbizide Mittel, die Mischungen aus substituierten Diphenyläthern mit 1H-2,1,3-Benzothiadiazin-4(3H)-on-2,2-dioxiden oder 1H-Pyridino-[3.2-e]-2,1,3-thiadiazin-4-(3H)-on-2,2-dioxiden enthalten, und Verfahren zur Bekämpfung unerwünschten Pflanzenwuchses mit diesen herbiziden Mitteln.

Substituierte Diphenyläther sind als herbizide Wirkstoffe aus der JP-OS 77/21320 bekannt. Sie zeichnen sich durch eine hohe Wirksamkeit bereits bei niedrigen Aufwandmengen aus, ihre Anwendung führt aber zu Schädigungen von Getreide und anderen Kulturpflanzen.

Ausserdem ist bekannt, dass 3-Alkyl-1H-2,1,3-benzothiadiazin-4(3H)-on-2,2-dioxide und 1H-Pyridino-[3.2-e]-2,1,3-thiadiazin-4(3H)-on-2,2-dioxide zur selektiven Bekämpfung unerwünschter breitblättriger Pflanzen geeignet sind (DE-PS 1 542 836, DE-OS 2 656 289, DE-OS 2 430 353, DE-OS 2 444 383, DE-OS 2 553 209, DE-OS 2 443 901).

Aus Chem. Abstr. 83, 127493g (1975) ist bekannt, dass 3-Isopropyl-1H-2,1,3-benzothiadiazin-4(3H)-on-2,2-dioxid zusammen mit 2,4-Dichlorphenyl-3-methoxycarbonyl-4-nitrophenylether eine synergistisch wirkende Herbizidmischung ergibt.

Es wurde gefunden, dass herbizide Mittel auf der Basis von Thiadiazinondioxiden und Diphenylethern, die 0,1 bis 95 Gew.-% einer Mischung aus einem Diphenyleter der Formel I

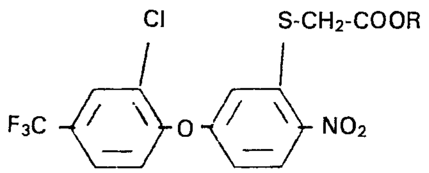

(I),

in der R Wasserstoff, ein Kation, Alkyl oder Halogenalkyl jeweils mit 1 bis 4 Kohlenstoffatomen bedeutet, und einem substituierten 1H-2,1,3-Benzothiadiazin-4(3H)-on-2,2-dioxid der Formel II

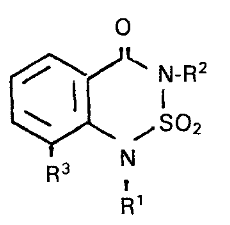

(II),

in der $R^4$ Wasserstoff oder ein Kation und $R^2$ Alkyl oxyalkyl mit 2 bis 4 Kohlenstoffatomen, $R^2$ Alkyl mit 1 bis 4 Kohlenstoffatomen und $R^3$ Wasserstoff, Alkyl mit 1 bis 4 Kohlenstoffatomen oder Halogen bedeuten, oder einem substituierten 1H-Pyridino-[3.2-e]-2,1,3-thiadiazin-4(3H)-on-2,2-dioxid der Formel III

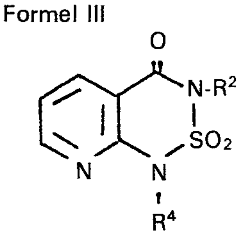

(III),

in er $R^4$ Wasserstoff oder ein Kation und $R^2$ Alkyl mit 1 bis 4 Kohlenstoffatomen bedeuten, enthalten, gegen breitblättrige Pflanzen intensiver wirksam sind als herbizide Mittel, die als Wirkstoffe lediglich substituierte Diphenyläther der Formel I oder Benzothiadiazinondioxide der Formel II bzw. Pyridinothiadiazinondioxide der Formel III enthalten. Überraschenderweise zeigen die Mischungen aus Diphenyläthern der Formel I und Benzothiadiazinondioxiden der Formel II Pyridinothiadiazinondioxiden der Formel III eine synergistische Wirkung. Überraschend ist ferner, dass die Kulturpflanzenverträglichkeit dieser Mischungen besser ist als die herbizider Mittel, die lediglich Diphenyläther der Formel I als Wirkstoffe enthalten.

Die erfindungsgemässen Mittel enthalten als Diphenyläther der Formel I beispielsweise 2-Chlor-4-trifluormethyl-3'-äthoxycarbonylmethylthio-4'-nitro-diphenyläther oder 2-Chlor-4-trifluormethyl-3'-hydroxycarbonylmethylthio-4'-nitrodiphenyläther bzw. dessen Natriumsalz, als Benzothiadiazinondioxide der Formel II beispielsweise 3-Isopropyl-1H-2,1,3-benzothiadiazin-4(3H)-on-2,2-dioxid, 3-Isopropyl-8-chlor-1H-2,1,3-benzothiadiazin-4(3H)-on-2,2-dioxid, 3-Isopropyl-8-fluor-1H-2,1,3-benzothiadiazin-4(3H)-on-2,2-dioxid, 3-(1-Methylethyl)-8-methyl-1H-2,1,3-benzothiadiazin-4(3H)-on-2,2-dioxid oder Salze dieser Verbindungen, wobei als Salze gegebenenfalls substituierte Ammoniumsalze, wie das Dimethylammonium- oder Diäthanolammoniumsalz, oder Metallsalze, wie Alkalimetallsalze, beispielsweise das Natriumsalz, in Betracht kommen, 1-Methoxymethyl-3-isopropyl-2,1,3-benzothiadiazin-4(3H)-on-2,2-dioxid, 1-Methoxymethyl-8-chlor-3-isopropyl-2,1,3-benzothiadiazin-4(3H)-on-2,2-dioxid, 1-Methoxymethyl-8-fluor-3-isopropyl-2,1,3-benzothiadiazin-4(3H)-on-2,2-dioxid, 1-Cyan-8-chlor-3-isopropyl-2,1,3-benzothiadiazin-4-(3H)-on-2,2-dioxid, 1-Cyan-8-fluor-3-isopropyl-2,-1,3-benzothiadiazin-4(3H)-on-2,2-dioxid, 1-Cyan-8-methyl-3-isopropyl-2,1,3-benzothiadiazin-4-(3H)-on-2,2-dioxid und 1-Cyan-3-isopropyl-2,1,3-benzothiadiazin-4(3H)-on-2,2-dioxid.

Als Pyridinothiadiazinondioxid der Formel III kommen 3-Isopropyl-1H-pyridino-[3.2-e]-2,1,3-thiadiazin-4(3H)-on-2,2-dioxid oder seine Salze, beispielsweise Alkalimetallsalze, wie das Natriumsalz, das Kaliumsalz, oder gegebenenfalls substituierte Ammoniumsalze, wie das Dimethylammoniumsalz, in Betracht.

Besonders bevorzugte Mischungskomponenten sind 2-Chlor-4-trifluormethyl-3'-äthoxycarbonylmethylthio-4'-nitro-diphenyläther, 3-Isopropyl-1H-2,1,3-benzothiadiazin-4(3H)-on-2,2-dioxid oder seine Salze, 3-Isopropyl-1H-pyridino-[3.2-e]-2,1,3-thiadiazin-4(3H)-on-2,2-dioxid oder seine Salze oder 1-Cyan-8-chlor-3-isopropyl-2,1,3-benzothiadiazin-4(3H)-on-2,2-dioxid.

Die Mischungsverhältnisse können einen weiten Bereich umfassen. Die Wahl des Mischungsverhältnisses hängt in erster Linie von dem zu bekämpfenden Unkrautspektrum, evtl. auch vom Entwicklungsstadium der zu bekämpfenden Pflanzen ab. Zweckmässigerweise liegt das Mischungsverhältnis von Diphenylether der Formel I : Benzothiadiazinondioxid der Formel II oder Pyridinothiadiazinondioxid der Formel III zwischen 1 : 100 und 1 : 1, vorzugsweise zwischen 1 : 40 und 1 : 1 Gewichtsteilen.

Die erforderliche Aufwandmenge an reiner Wirkstoffmischung ohne Formulierungshilfsmittel ist abhängig von der Zusammensetzung des Pflanzenbestandes, dessen Entwicklungsstadium und den klimatischen Verhältnissen des Einsatzortes. Im allgemeinen betragen die Aufwandmengen 0,1 bis 5,0 kg Wirkstoffmischung/ha.

Als Kulturen, in denen die erfindungsgemässen herbiziden Mittel über das Blatt angewendet werden können, kommen im wesentlichen diejenigen in Betracht, in denen die Einzelwirkstoffe eingesetzt werden können, beispielsweise Getreidearten, Erdnüsse, etablierte Luzerne und zahlreiche andere ein- oder mehrjährige, krautige oder verholzende Pflanzen.

Von Bedeutung ist die Ausbringungstechnik. Die erfindungsgemässen Mittel können im Vor- und Nachauflaufverfahren, vorzugsweise im Nachauflaufverfahren, von Kulturpflanzen und unerwünschten Pflanzen ausgebracht werden. Eine spezielle Methode ist ferner, die Ausbringung so zu lenken, dass die Blätter der anwesenden Kulturpflanzen möglichst wenig mit den Mitteln in Berührung kommen, während die dazwischen oder darunter wachsenden unerwünschten Pflanzen oder die freie Bodenfläche getroffen werden (Unterblattspritzung, post-directed, lay-by).

In Anbetracht der Vielseitigkeit der Applikationsmethoden können die erfindungsgemässen Mittel oder diese enthaltende Mischungen in einer grossen Zahl von Kulturen zur Beseitigung unerwünschten Pflanzenwuchses eingesetzt werden.

Im einzelnen seien folgende Nutzpflanzen genannt:

| Botanischer Name | Deutscher Name | Englischer Name |
|---|---|---|
| Allium cepa | Küchenzwiebel | onions |
| Ananas comosus | Ananas | pineapple |
| Arachis hypogaea | Erdnuss | peanuts (groundnuts) |
| Asparagus officinalis | Spargel | asparagus |
| Aventa sativa | Hafer | oats |
| Beta vulgaris spp. altissima | Zuckerrübe | sugarbeets |
| Beta vulgaris spp. rapa | Futterrübe | fodder beets |
| Beta vulgaris spp. esculenta | Rote Rübe | table beets, red beets |
| Brassica napus var. napus | Raps | rape seed |
| Brassica napus var. napobrassica | Kohlrübe | |
| Brassica napus var. rapa | Weisse Rübe | turnips |
| Brassica napus var. silvestris | Rübsen | |
| Camellia sinensis | Teestrauch | tea plants |
| Carthamus tinctorius | Saflor-Färbedistel | safflower |
| Carya illinoinensis | Pekannussbaum | pecan trees |
| Citrus limon | Zitrone | lemon |
| Citrus maxima | Pampelmuse | grapefruits |
| Citrus reticulata | Mandarine | |
| Citrus sinensis | Apfelsine, Orange | orange trees |
| Coffea arabica (Coffea cane phora, Coffea liberica) | Kaffee | coffee plants |
| Cucumis melo | Melone | melons |
| Cucumis sativus | Gurke | cucumber |
| Cynodon dactylon | Bermudagras | Bermudagrass in turfs and lawns |
| Daucus carota | Möhre | carrots |
| Elaeis guineensis | Ölpalme | oil palms |
| Fragaria vesca | Erdbeere | strawberries |
| Glycine max | Sojabohne | soybeans |
| Gossypium hirsutum (Gossypium arboreum Gossypium herbaceum Gossypium vitifolium) | Baumwolle | cotton |
| Helianthus annuus | Sonnenblume | sunflowers |
| Helianthus tuberosus | Topinambur | |
| Hevea brasiliensis | Parakautschukbaum | rubber plants |
| Hordeum vulgare | Gerste | barley |
| Humulus lupulus | Hopfen | hop |
| Ipomoea batatas | Süsskartoffeln | sweet potato |
| Juglans regia | Walnussbaum | walnut trees |
| Lactuca sativa | Kopfsalat | lettuce |
| Lens culinaris | Linse | lentils |
| Linum usitatissimum | Faserlein | flax |

| Botanischer Name | Deutscher Name | Englischer Name |
|---|---|---|
| Lycopersiocon lycopersicum | Tomate | tomato |
| Malus spp. | Apfel | apple trees |
| Manihot esculenta | Maniok | cassava |
| Medicago sativa | Luzerne | alfalfa (lucerne) |
| Mentha piperita | Pfefferminze | peppermint |
| Musa spp. | Obst- u. Mehlbanane | banana plants |
| Nicotiana tabacum (N. rustica) | Tabak | tobacco |
| Olea europaea | Ölbaum | olive trees |
| Oryza sativa | Reis | rice |
| Panicum miliaceum | Rispenhirse | |
| Phaseolus lunatus | Mondbohne | limabeans |
| Phaseolus mungo | Urdbohne | mungbeans |
| Phaseolus vulgaris | Buschbohnen | snapbeans, green beens, dry beans |
| Pennisetum glaucum | Perl- oder Rohrkolbenhirse | |
| Petroselinum crispum spp. tuberosum | Wurzelpetersilie | parsley |
| Picea abies | Rotfichte | Norway spruce |
| Abies alba | Weisstanne | fire |
| Pinus spp. | Kiefer | pine trees |
| Pisum sativum | Gartenerbse | English peas |
| Prunus avium | Süsskirsche | cherry trees |
| Prunus domestica | Pflaume | plum trees |
| Prunus dulcis | Mandelbaum | almond trees |
| Prunus persica | Pfirsich | peach trees |
| Pyrus communis | Birne | pear trees |
| Ribes sylvestre | Rote Johannisbeere | red currants |
| Ribes uva-crispa | Stachelbeere | |
| Ricinus communis | Rizinus | |
| Saccharum officinarum | Zuckerrohr | sugar cane |
| Secale cereale | Roggen | rye |
| Sesamum indicum | Sesam | Sesame |
| Solanum tuberosum | Kartoffel | Irish potato |
| Sorghum bicolor (s. vulgare) | Mohrenhirse | sorghum |
| Sorghum dochna | Zuckerhirse | |
| Spinacia oleracea | Spinat | spinach |
| Theobroma cacao | Kakaobaum | cacao plants |
| Trifolium pratense | Rotklee | red clover |
| Triticum aestivum | Weizen | wheat |
| Vaccinium carymbosum | Kulturheldelbeere | blueberry |
| Vaccinium vitis-idaea | Preisselbeere | cranberry |
| Vicia faba | Pferdebohnen | tick beans |
| Vigna sinensis (V. unguiculata) | Kuhbohne | cow peas |
| Vitis vinifera | Weinrebe | grapes |
| Zea mays | Mais | Indian corn, sweet corn, maize |

Die erfindungsgemässen herbiziden Mittel werden beispielsweise in Form von direkt versprühbaren Lösungen, Pulvern, Suspensionen, auch hochprozentige wässrige, ölige oder sonstige Suspensionen oder Dispersionen, Emulsionen, Öldispersionen, Pasten, Stäubemitteln, Streumitteln oder Granulaten durch Versprühen, Vernebeln, Verstäuben, Verstreuen oder Giessen angewendet. Die Anwendungsformen richten sich ganz nach den Verwendungszwecken; sie sollten in jedem Fall möglichst die feinste Verteilung der erfindungsgemässen Wirkstoffmischungen gewährleisten.

Zur Herstellung von direkt versprühbaren Lösungen, Emulsionen, Pasten und Öldispersionen kommen Mineralölfraktionen von mittlerem bis hohem Siedepunkt wie Kerosin oder Dieselöl, ferner Kohlenteeröle, sowie Öle pflanzlichen oder tierischen Ursprungs, aliphatische, cyclische und aromatische Kohlenwasserstoffe, z.B. Benzol, Toluol, Xylol, Paraffin, Tetrahydronaphthalin, alkylierte Naphthaline oder deren Derivate, z.B. Methanol, Äthanol, Propanol, Butanol, Chloroform, Tetrachlorkohlenstoff, Cyclohexanol, Cyclohexanon, Chlorbenzol, Isophoron, stark polare Lösungsmittel, wie z.B. Dimethylformamid, Dimethylsulfoxid, N-Methylpyrrolidon, Wasser, in Betracht.

Wässrige Anwendungsformen können aus Emulsionskonzentraten, Pasten oder netzbaren Pulvern (Spritzpulvern), Öldispersionen durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermittel in Wasser homogenisiert werden. Es können aber auch aus wirksamer Substanz, Netz-, Haft-, Dispergier- oder Emulgiermittel und eventuell Lösungsmittel oder Öl bestehende Konzentrate hergestellt werden, die zur Verdünnung mit Wasser geeignet sind.

Als oberflächenaktive Stoffe kommen in Betracht: Alkali-, Erdalkali-, Ammoniumsalze von Ligninsulfonsäure, Naphthalinsulfonsäuren, Phenolsulfonsäure, Alkylarylsulfonate, Alkylsulfate, Alkylsulfonate, Alkali- und Erdalkalisalze der Dibutylnaphthalinsulfonsäure, Lauryläthersulfat, Fettalkoholsulfate, fettsaure Alkali- und Erdalkalisalze, Salze sulfatierter Hexadecanole, Heptadecanole, Octadecanole, Salze von sulfatiertem Fettalkoholglykoläther, Kondensationsprodukte von sulfoniertem Naphthalin und Naphthalinderivaten mit Formaldehyd, Kondensationsprodukte des Naphthalins bzw. der Naphthalinsulfonsäuren mit Phenol und Formaldehyd, Polyoxyäthylen-octylphenoläther, äthoxyliertes Isooctylphenol-, Octylphenol-, Nonylphenol, Alkylphenolpolyglykoläther, Tributylphenylpolyglykoläther, Alkalarylpolyätheralkohole, Isotridecylalkohole, Fettalkoholäthylenoxid-Kondensate, äthoxyliertes Rizinusöl, Polyoxyäthylenalkyläther, äthoxyliertes Polyoxypropylen, Laurylalkoholpolyglykolätheracetal, Sorbitester, Lignin, Sulfitablaugen und Methylcellulose.

Pulver, Streu- und Stäubemittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind Mineralerden wie Silicagel, Kieselsäuren, Kieselgel, Silikate, Talkum, Kaolin, Attaclay, Kalkstein, Kreide, Talkum, Bolus, Löss, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehle, Baumrinden-, Holz- und Nussschalenmehl, Cellulosepulver und andere feste Trägerstoffe.

Die Formulierungen enthalten zwischen 0,1 bis 95 Gew.-% Wirkstoffmischung, vorzugsweise zwischen 0,5 und 90 Gew.-%

Beispiele für Formulierungen sind:

I. 20 Gewichtsteile einer Mischung aus einem Gewichtsteil 2-Chlor-4-trifluormethyl-3'-äthoxycarbonylmethylthio-4'-nitro-diphenyläther und einem Gewichtsteil 3-Isopropyl-1H-2,1,3-benzothiadiazin-4(3H)-on-2,2-dioxid werden in einer Mischung gelöst, die aus 80 Gewichtsteilen Xylol, 10 Gewichtsteilen des Anlagerungsproduktes von 8 bis 10 Mol Äthylenoxid an 1 Mol Ölsäure-N-monoäthanolamid, 5 Gewichtsteilen Calciumsalz der Dodecylbenzolsulfonsäure und 5 Gewichtsteilen des Anlagerungsproduktes von 40 Mol Äthylenoxid an 1 Mol Ricinusöl besteht. Durch Ausgiessen und feines Verteilen der Lösung in 100 000 Gewichtsteilen Wasser erhält man eine wässrige Dispersion, die 0,02 Gew.-% des Wirkstoffs enthält.

II. 20 Gewichtsteile einer Mischung aus einem Gewichtsteil 2-Chlor-4-trifluormethyl-3'-äthoxycarbonylmethylthio-4'-nitro-diphenyläther und 10 Gewichtsteilen 3-Isopropyl-1H-2,1,3-benzothiadiazin-4(3H)-on-2,2-dioxid werden in einer Mischung gelöst, die aus 40 Gewichtsteilen Cyclohexanon, 30 Gewichtsteilen Isobutanol, 20 Gewichtsteilen des Anlagerungsproduktes von 7 Mol Äthylenoxid an 1 Mol Isooctylphenol und 10 Gewichtsteilen des Anlagerungsproduktes von 40 Mol Äthylenoxid an 1 Mol Ricinusöl besteht. Durch Eingiessen und feines Verteilen der Lösung von 100 000 Gewichtsteilen Wasser erhält man eine wässrige Dispersion, die 0,02 Gew.-% des Wirkstoffs enthält.

III. 3 Gewichtsteile einer Mischung aus einem Gewichtsteil 2-Chlor-4-trifluormethyl-3'-äthoxycarbonylmethylthio-4'-nitro-diphenyläther und 40 Gewichtsteilen des Diäthanolammoniumsalzes des 3-Isopropyl-1H-2,1,3-benzothiadiazin-4(3H)-on-2,2-dioxids werden mit 97 Gewichtsteilen feinteiligem Kaolin innig vermischt. Man erhält auf diese Weise ein Stäubemittel, das 3 Gew.-% des Wirkstoffs enthält.

IV. 20 Teile einer Mischung aus einem Gewichtsteil 2-Chlor-4-trifluormethyl-3'-äthoxycarbonylmethylthio-4'-nitro-diphenyläther und 3 Gewichtsteilen des Natriumsalzes des 3-Isopropyl-1H-2,1,3-benzothiadiazin-4(3H)-on-2,2-dioxids werden mit 2 Teilen Calciumsalz der Dodecylbenzolsulfonsäure, 8 Teilen Fettalkohol-polyglykoläther, 2 Teilen Natriumsalz eines Phenolsulfonsäure-harnstoff-formaldehyd-Kondensats und 68 Teilen eines paraffinischen Mineralöls innig vermischt. Man erhält eine stabile ölige Dispersion.

V. 30 Gewichtsteile einer Mischung aus einem Gewichtsteil 2-Chlor-4-trifluormethyl-3'-äthoxycarbonylmethylthio-4'-nitro-diphenyläther und 10 Gewichtsteilen 3-Isopropyl-1H-pyridino-[3.2-e]-2,1,3-thiadiazin-4(3H)-on-2,2-dioxid werden mit einer Mischung aus 92 Gewichtsteilen pulverförmigem Kieselsäuregel und 8 Gewichtsteilen Paraffinöl, das auf die Oberfläche dieses Kieselsäuregels gesprüht wurde, innig vermischt. Man erhält auf diese Weise eine Aufbereitung des Wirkstoffs mit guter Haftfähigkeit.

Die erfindungsgemässen herbiziden Mittel können zusätzlich mit zahlreichen Vertretern weiterer herbizider oder wachstumregulierender Wirkstoffgruppen gemischt und gemeinsam ausgebracht werden. Beispielsweise kommen als Mischungskomponenten Diazine, 2,6-Dinitroaniline, N-Phenyl-carbamate, Thiolcarbamate, Halogencarbonsäuren, Triazine, Amide, Harnstoffe, Triazinone, Uracile, Benzofuranderivate und andere in Betracht. Solche Kombinationen dienen zur Verbreiterung des Wirkungsspektrums.

Ausserdem ist es nützlich, die neuen erfindungsgemässen Mischungen ausser auch noch mit weiteren Pflanzenschutzmitteln gemeinsam auszubringen, beispielsweise mit Mitteln zur Bekämpfung von Schädlingen oder phytopathogenen Pilzen bzw. Bakterien. Von Interesse ist ferner die Mischbarkeit mit Mineralstofflösungen, welche zur Behebung von Ernährungs- oder Spurenelementmängeln eingesetzt werden. Zur Aktivierung der herbiziden Wirkung können Netz- und Haftmittel sowie nicht phytotoxische Öle und Ölkonzentrate zugesetzt werden.

Durch die folgenden Gewächshaus- und Freilandversuche wird die biologische Wirkung der erfindungsgemässen Mittel belegt.

Bei den Gewächshausversuchen dienten Plastikblumentöpfe mit 300 $cm^3$ Inhalt und lehmigem Sand mit etwa 1,5% Humus als Substrat als Kulturgefässe. Die Samen der Testpflanzen wurden nach Arten getrennt flach eingesät oder es wurden vorgekeimte Jungpflanzen eingesetzt. Generell wurden die Pflanzen zum Zwecke der Nachauflaufbehandlung bis zu einer Höhe von 3 bis 10 cm gezogen und danach behandelt. Die Wirkstoffe wurden auf die Sprossteile der Pflanzen und die nicht völlig von Pflanzen abgedeckte Bodenfläche, in Wasser als Verteilungsmittel suspendiert oder emulgiert, mittels fein verteilender Düsen gespritzt. Die Versuchstöpfe wurden dann in verschiedenen Temperaturbereichen der Gewächshausanlagen aufgestellt, wobei für wärmeliebende Arten 20 bis 30°C und für solche gemässigter Klimate 10 bis 20°C bevorzugt wurden.

Bei den Freilandversuchen handelt es sich um Kleinparzellenversuche, bei denen die Wirkstoffe bzw. die Wirkstoffmischungen mit Wasser als Träger und Verteilungsmittel, mit einer auf einen Traktor montierten Parzellenspritze im Nachauflaufverfahren ausgebracht werden.

Die folgenden Tabellen enthalten die Prüfsubstanzen, die jeweiligen Dosierungen in kg/ha Aktivsubstanz und die Testpflanzenarten. Bewertet wird nach einer Skala von 0 bis 100. Dabei bedeutet 0 keine Schädigung oder normaler Auflauf und 100 kein Aufgang der Pflanzen bzw. völlige Zerstörung zumindest der oberirdischen Sprossteile.

Folgende Wirkstoffe wurden verwendet:

2-Chlor-4-trifluormethyl-3'-äthoxycarbonylmethylthio-4'-nitro-diphenyläther (Wirkstoff A),

3-Isopropyl-1H-2,1,3-benzothiadiazin-4(3H)-on-2,2-dioxid (Wirkstoff B),

3-Isopropyl-1H-pyridino-[3.2-e]-2,1,3-thiadiazin-4(3H)-on-2,2-dioxid (Wirkstoff C).

Tabelle 1: Liste der Pflanzennamen

| Botanische Bezeichnung | Deutsche Bezeichnung | Englische Bezeichnung |
|---|---|---|
| Chenopodium album | Melde | lambsquarters |
| Matricaria spp. | Kamillearten | chamomile |
| Raphanus spp. | Hederich | wild radish |
| Sinapis spp. | Ackersenf | mustard |
| Triticum aestivum | Weizen | wheat |
| Galium aparine | Klettenlabkraut | catchweed bedstraw |
| Matricaria spp. | Kamillearten | chamomile |
| Stellaria media | Vogelsternmiere | chickweed |

Tabelle 2: Verbesserung der Herbizidaktivität bei gleichzeitig günstigerer Kulturpflanzenverträglichkeit durch Kombination der Wirkstoffe A und B bei Nachauflaufanwendung im Freiland

| | | Testpflanzen und Schädigung [%] | | | |
|---|---|---|---|---|---|
| Wirkstoffe | Aufwandmenge [kg a.S./ha] | Triticum* aestivum | Chenopodium album | Matricaria spp. | Raphanus Sinapis spp. |
| A | 0,125 | 8 | 55 | 78 | 72 |
| | 0,25 | 10 | 65 | 89 | 85 |
| B | 0,75 | 0 | 30 | 73 | 40 |
| | 1,0 | 0 | 45 | 81 | 50 |
| A + B | 0,125+0,75 | 2 | 65 | 98 | 80 |
| | 0,25 +0,75 | 5 | 75 | 98 | 90 |

0 = keine Schädigung     * Sommerweizen Sorte «Kolibri»
100 = Pflanzen abgestorben

Tabelle 3: Synergistische Steigerung der herbiziden Aktivität bei Verwendung von Mischungen der Verbindung A mit Verbindung C bei Nachlaufanwendung im Gewächshaus

| | | Testpflanzen und Schädigung [%] | | |
|---|---|---|---|---|
| Wirkstoffe | Aufwandmenge [kg a.S./ha] | Galium aparine | Matricaria spp. | Stellaria media |
| A | 0,03 | 84 | 75 | 75 |
| C | 0,25 | 17 | 49 | 47 |
| | 0,75 | 30 | 65 | 63 |
| A + C | 0,03+0,25 | 98 | 100 | 100 |
| | 0,03+0,75 | 99 | 100 | 100 |

0 = keine Schädigung
100 = Pflanzen abgestorben

**Patentansprüche**

1. Herbizides Mittel auf der Basis von Thiadiazinondioxiden und Diphenylethern, dadurch gekennzeichnet, dass es 0,1 bis 95 Gew.-% einer Mischung aus einem Diphenylether der Formel I

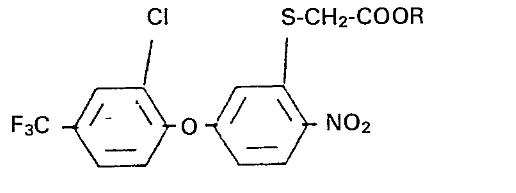

(I),

in der R Wasserstoff, ein Kation, Alkyl oder Halogenalkyl jeweils mit 1 bis 4 Kohlenstoffatomen bedeutet, und einem substituierten 1H-2,1,3-Benzothiadiazin-4(3H)-on-2,2-dioxid der Formel II

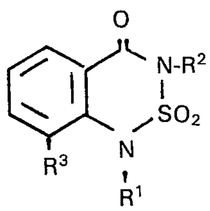

(II)

in der $R^1$ Wasserstoff, ein Kation, Cyano oder Alkoxyalkyl mit 2 bis 4 Kohlenstoffatomen, $R^2$ Alkyl mit 1 bis 4 Kohlenstoffatomen und $R^3$ Wasserstoff, Alkyl mit 1 bis 4 Kohlenstoffatomen oder Halogen bedeuten, oder einem substituierten 1H-Pyridino-[3.2-e]-2,1,3-thiadiazin-4(3H)-on-2,2-dioxid der Formel III

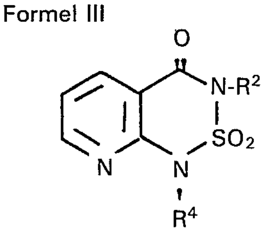

(III)

in der $R^4$ Wasserstoff oder ein Kation und $R^2$ Alkyl mit 1 bis 4 Kohlenstoffatomen bedeuten, enthält.

2. Herbizide Mittel gemäss Anspruch 1, dadurch gekennzeichnet, dass sie als Diphenyläther der Formel I 2-Chlor-4-trifluormethyl-3'-äthoxycarbonyl-methylthio-4'-nitro-diphenyläther enthalten.

3. Herbizide Mittel gemäss Anspruch 1, dadurch gekennzeichnet, dass sie als 1H-2,1,3-Benzothiadiazin-4(3H)-on-2,2-dioxid der Formel II 3-Isopropyl-1H-2,1,3-benzothiadiazin-4(3H)-on-2,2-dioxid oder ein Salz dieser Verbindung enthalten.

4. Herbizide Mittel gemäss Anspruch 1, dadurch gekennzeichnet, dass sie als 1H-Pyridino-[3.2-e]-2,1,3-thiadiazin-4(3H)-on-2,2-dioxid der Formel III 3-Isopropyl-1H-pyridino-[3.2-e]-2,1,3-thiadiazin-4(3H)-on-2,2-dioxid oder ein Salz dieser Verbindung enthalten.

5. Herbizide Mittel gemäss Anspruch 1, dadurch gekennzeichnet, dass das Mischungsverhältnis Diphenyläther der Formel I : 1H-2,1,3-Benzothiadiazin-4(3H)-on-2,2-dioxid der Formel II bzw. 1H-Pyridino-[3.2-e]-2,1,3-thiadiazin-4(3H)-on-2,2-dioxid der Formel III 1 : 100 bis 1 : 1 Gewichtsteile beträgt.

6. Verfahren zur Bekämpfung unerwünschten Pflanzenwuchses, dadurch gekennzeichnet, dass man herbizide Mittel gemäss Anspruch 1 verwendet.

7. Verwendung von herbiziden Mitteln gemäss Anspruch 1 zur Bekämpfung unerwünschten Pflanzenwuchses.

**Claims**

1. A herbicidal agent, based on a thiadiazinone dioxide and a diphenyl ether, containing from 0.1 to 95% by weight of a mixture of a diphenyl ether of the formula I

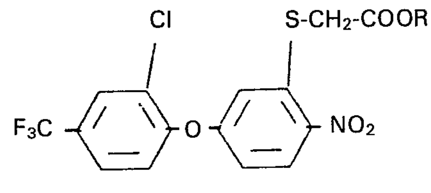

(I),

where R is hydrogen, a cation or haloalkyl of from 1 to 4 carbon atoms, and a substituted 1H-2,1,3-benzothiadiazin-4(3H)-one-2,2-dioxide of the formula II

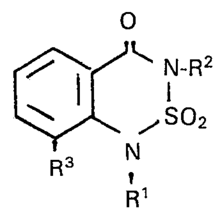

(II)

where $R^1$ is hydrogen, a cation, cyano or alkoxyalkyl of from 2 to 4 carbon atoms, $R^2$ is alkyl of from 1 to 4 carbon atoms and $R^3$ is hydrogen, alkyl of from 1 to 4 carbon atoms or halogen, or a substituted 1H-pyridino-[3.2-e]-2,1,3-thiadiazin-4(3H)-one-2,2-dioxide of the formula III

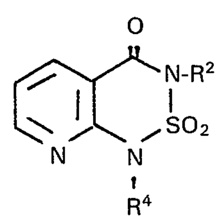

(III)

where $R^4$ is hydrogen or a cation and $R^2$ is alkyl of from 1 to 4 carbon atoms.

2. A herbicidal agent as claimed in claim 1, wherein the diphenyl ether of the formula I is 2-chloro-4-trifluoromethyl-3'-ethoxycarbonylmethylthio-4'-nitrodiphenyl ether.

3. A herbicidal agent as claimed in claim 1, wherein the 1H-2,1,3-benzothiadiazin-4(3H)-one-2,2-dioxide of the formula II is 3-isopropyl-1H-2,1,3-benzothiadiazin-4(3H)-one-2,2-dioxide or a salt thereof.

4. A herbicidal agent as claimed in claim 1, wherein the 1H-pyridino-[3.2-e]-2,1,3-thiadiazin-4(3H)-one-2,2-dioxide of the formula III is 3-isopropyl-1H-pyridino-[3.2-e]-2,1,3-thiadiazin-4(3H)-one-2,2-dioxide or a salt thereof.

5. A herbicidal agent as claimed in claim 1, wherein the ratio of diphenyl ether of the formula I to 1H-2,1,3-benzothiadiazin-4(3H)-one-2,2-dioxide of the formula II or 1H-pyridino-[3.2-e]-2,1,3-thiadia-

zin-4(3H)-one-2,2-dioxide of the formula III is from 1 : 100 to 1 : 1 parts by weight.

6. A process for combating unwanted plant growth, wherein a herbicidal agent as claimed in claim 1 is employed.

7. The use of a herbicidal agent as claimed in claim 1 for combating unwanted plant growth.

**Revendications**

1. Agents herbicides à base de dioxydes de thiadiazinone et diphényléthers, caractérisés par le fait qu'ils contiennent 0,1 à 95% en poids d'un mélange d'un diphényléther de formule I

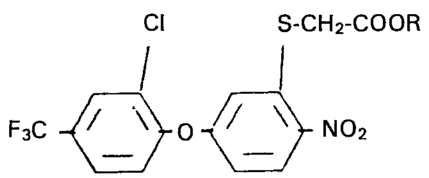

(I),

dans laquelle R représente l'hydrogène, un cation, alkyle ou halogénalkyle de chacun 1 à 4 atomes de carbone et d'un 2,2-dioxyde de 1H-2,1,3-benzothiadiazin-4(3H)-one, de formule II

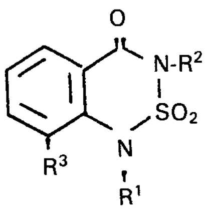

(II)

dans laquelle $R^1$ représente hydrogène, un cation cyano ou alcoxyalkyle à 2 à 4 atomes de carbone, $R^2$ alkyle à 1 à 4 atomes de carbone et $R^3$ hydrogène, alkyle à 1 à 4 atomes de carbone ou halogène, ou d'un 2,2-dioxyde de 1H-pyridino-[3.2-e]-2,1,3-thiadiazin-4(3H)-one de formule III

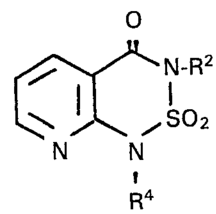

(III)

dans laquelle $R^4$ représente hydrogène ou un cation, et $R^2$ représente alkyle à 1 à 4 atomes de carbone.

2. Agents herbicides selon la revendication 1, caractérisés par le fait qu'ils contiennent, comme diphényléther de formule I, du 2-chloro-4-trifluorométhyl-3'-éthoxycarbonyl-méthylthio-4'-nitro-diphényléther.

3. Agents herbicides selon la revendication 1, caractérisés par le fait qu'ils contiennent, comme 2,2-dioxyde de 1H-2,1,3-benzothiadiazin-4(3H)-one de formule II, du 2,2-dioxyde de 3-isopropyl-1H-2,1,3-benzothiadiazin-4(3H)-one ou un sel de ce composé.

4. Agents herbicides selon la revendication 1, caractérisés par le fait qu'ils contiennent, comme 2,2-dioxyde de 1H-pyridino-[3.2-e]-2,1,3-thiadiazin-4(3H)-one de formule III, du 2,2-dioxyde de 3-isopropyl-1H-pyridino-[3.2-e]-2,1,3-thiadiazin-4(3H)-one ou un sel de ce composé.

5. Agents herbicides selon la revendication 1, caractérisés par le fait que le rapport de mélange du diphényléther de formule I au 2,2-dioxyde de 1H-2,1,3-benzothiadiazin-4(3H)-one de formule II ou 2,2-dioxyde de 1H-pyridino-[3.2-e]-2,1,3-thiadiazin-4(3H)-one de formule III est de 1 : 100 à 1 : 1 parties en poids.

6. Procédé de lutte contre la croissance indésirable des plantes, caractérisé par le fait que l'on utilise un agent herbicide selon la revendication 1.

7. Utilisation d'agents herbicides selon la revendication 1 pour la lutte contre la croissance indésirable des plantes.